# EUROPÄISCHE PATENTANMELDUNG

(11) **EP 4 254 692 A1**
(43) Veröffentlichungstag der Anmeldung: **04.10.2023**
(21) Anmeldenummer: 23000049.9
(22) Anmeldetag: 28.03.2023
(51) Int. Cl.: H02G 3/04, H02G 3/06

(54) **KABELRINNE**

(30) Priorität: 28.03.2022 DE 102022001072
(71) Anmelder: PohlCon GmbH, 12057 Berlin (DE)
(72) Erfinder: Uwe, Kaiser, D-18445 Prohn (DE)
(74) Vertreter: Jungblut & Seuss

(57) **Zusammenfassung**

Die Erfindung betrifft eine Kabelrinnentechnologie, wobei zumindest zwei Rinnenelemente (1, 1') miteinander verbindbar sind, wobei die Rinnenelemente (1, 1') jeweils zumindest einen Rinnenabschnitt (6') aufweisen, wobei in den Rinnenabschnitten (6') ein Raster von ersten Verbindungselementen (8), in Längserstreckung des Rinnenabschnitts (6') betrachtet, eingerichtet ist, welche mit zweiten Verbindungselementen (9) eines Verbindungsabschnitts (6) rastend verbindbar sind, wodurch die Rinnenabschnitte (6') beliebig kürzbar und dennoch mit Verbindungsabschnitten (6) verrastbar sind, sowie Rinnenelemente (1, 1') hierfür.

## Beschreibung

### Gebiet der Erfindung

Die Erfindung betrifft eine neuartige Kabelrinnentechnologie, wobei zumindest zwei Rinnenelemente miteinander verbindbar sind, wobei die Rinnenelemente jeweils zumindest einen Rinnenabschnitt aufweisen, wobei in den Rinnenabschnitten ein Raster von ersten Verbindungselementen, in Längserstreckung des Rinnenabschnitts betrachtet, eingerichtet ist, welche mit zweiten Verbindungselementen eines Verbindungsabschnitts rastend verbindbar sind, wodurch die Rinnenabschnitte beliebig kürzbar und somit in beliebiger (Raster-) Länge mit Verbindungsabschnitten verrastbar sind.

### Stand der Technik und Hintergrund der Erfindung

Kabelrinnen mit miteinander verbindbaren Rinnenelementen sind beispielsweise aus der Literaturstelle EP 1788681 A2 bekannt. Bei diesen Kabelrinnen werden die miteinander zu verbindenden Rinnenelemente in Richtung ihrer Längserstreckung miteinander verbunden bzw. ineinander gesteckt. Dies ist in der Handhabung diffizil. Hinzu kommt, dass bei der insofern bekannten Kabelrinne die Rinnenelemente miteinander verschraubt werden müssen, wozu einerseits zusätzliche baulich separate Verbindungselemente, wie Schrauben, Muttern, Nieten und dergleichen zur Verfügung gestellt werden müssen und andererseits der Montageaufwand erheblich erhöht ist.

Aus der Literaturstelle EP 2234230 ist eine Kabelrinne bekannt, deren Rinnenelemente konstruktiv zwingend eine Wannenform aufweisen und welche weitere zu handhabende und ineinander einzuführende Verbindungselemente aufweisen. Auch dies ist montagetechnisch aufwändig.

Aus der Literaturstelle FR 2611830 ist eine Kabelrinne bekannt, wobei zwei Rinnenelemente auf Stoß mittels eines Verbindungselementes verbunden werden.

Aus der Literaturstelle DE 202008009852 U1 ist ebenfalls eine Kabelrinne bekannt. Bei der insofern bekannten Kabelrinne sind an dem dem Verbindungsabschnitt gegenüberliegenden Ende der Rinnenelemente Verbindungelemente eingerichtet, welche verschieden von den weiteren Verbindungselementen des Rinnenabschnitts sind. Des Weiteren müssen zur Verbindung von zwei Rinnenelementen zwei orthogonal zueinander stehende Relativbewegungen ausgeführt werden. Zunächst müssen die ersten Enden und die zweiten Enden übereinander gestülpt und danach aufeinander zu geschoben werden.

Bei dieser Kabelrinne ist von besonderem Nachteil, dass die Rinnenelemente ausschließlich in der herstellungsbedingten Länge verbaut werden können. Ein Kürzen ist nicht möglich, da ein gekürztes Rinnenelement nicht mehr an seinem gekürzten Ende mit einem Verbindungsabschnitt verbindbar ist.

### Technisches Problem der Erfindung

Der Erfindung liegt das technische Problem zugrunde, eine Kabelrinnentechnologie anzugeben, welche auf einfache Weise aufzubauen ist, unter Verzicht auf baulich separate Verbindungselemente. Der Erfindung liegt insbesondere das weitere technische Problem zu Grunde eine Kabelrinnentechnologie anzugeben, bei welcher einzelne Rinnenelemente gekürzt werden können, ohne dass dadurch die Verbindungseignung der Rinnenelemente verloren geht.

### Grundzüge der Erfindung und bevorzugte Ausführungsformen

Zur Lösung dieses technischen Problems lehrt die Erfindung eine Kabelrinnentechnologie, wobei zumindest zwei Rinnenelemente miteinander verbindbar sind, wobei die Rinnenelemente jeweils zumindest einen Rinnenabschnitt aufweisen, wobei in den Rinnenabschnitten ein Raster von ersten Verbindungselementen, in Längserstreckung des Rinnenabschnitts betrachtet, eingerichtet ist, welche mit zweiten Verbindungselementen eines Verbindungsabschnitts rastend verbindbar sind, wodurch die Rinnenabschnitte beliebig kürzbar und somit in beliebiger (Raster-) Länge mit Verbindungsabschnitten verrastbar sind.

Die Verbindungsabschnitte können an Rinnenabschnitten angefügt oder angeformt sein. Alternativ können die Verbindungsabschnitte baulich separat von den Rinnenabschnitten sein.

Mit der Erfindung wird insbesondere erreicht, dass ein Rinnenelement an bzw. in seinem Rinnenabschnitt problemlos gekürzt werden kann. Nach einer Kürzung endständig verbleibende erste Verbindungselemente behalten aufgrund der identischen Ausbildung entlang der Längserstreckung des Rinnenelementes ihre funktionelle Eignung als erste Verbindungselemente.

Einfach ausgedrückt, erlaubt die erfindungsgemäße Anordnung der ersten Verbindungselemente das Kürzen der Rinnenelement vom zweiten Ende aus betrachtet bzw. im Rinnenabschnitt, da eine Mehrzahl von ersten (nämlich identischen) Verbindungselementen, in Längsrichtung eines Rinnenelementes betrachtet, eingerichtet sind (Raster).

Mit der Erfindung wird eine erheblich vereinfachte Montage ermöglicht. Rinnenelemente werden durch Einlegen eines zweiten Endes eines Rinnenelementes in den Verbindungsbereich eines daran anzuschließenden weiteren Rinnenelementes oder eines Verbindungselementes, oder durch Überstülpen, miteinander verbunden. Ein zielgenaues Ineinanderschieben ist nicht erforderlich, insbesondere ist es entbehrlich zu verbindende Rinnenelemente aufeinander zu zubewegen. Dadurch ist auch ein bei beengten Verhältnissen ein Verkippen entbehrlich. Zudem kann auf jegliche Verschraubung etc. verzichtet werden. Die Verbindung zweier Rinnenelemente ist eine Arbeit weniger Sekunden und bedarf keines besonderen manuellen Geschicks, und zwar unabhängig davon, ob ein Rinnenelement gekürzt ist, oder nicht.

Eine erfindungsgemäß einsetzbare Kabelrinne weist keine von den Rinnenelementen baulich separaten Verbindungselemente zur unmittelbaren Verbindung eines ersten Rinnenelementes mit einem zweiten Rinnenelement aufweist. Die Rinnenelemente weisen über die gesamte Längserstreckung, mit Ausnahme des Verbindungsbereiches, in vorgegebenen Abständen, in Längsrichtung des Rinnenelementes betrachtet, erste (zueinander) identische Verbindungselemente auf, wobei die Verbindungsabschnitte zweite Verbindungselemente aufweisen, welche komplementär zu den ersten Verbindungselementen sind. Bei Einführung des Verbindungsabschnitts in ein zweites Ende eines Rinnenelementes oder bei Einführung eines zweites Ende eines Rinnenelementes in den Verbindungsabschnitt, in Richtung senkrecht zur Längserstreckung der Rinnenelemente, werden die ersten und die zweiten Verbindungselemente miteinander verbunden, beispielsweise verrastet, wobei aufgrund der identischen ersten Verbindungselemente ein zweites Ende eines zweiten Rinnenelementes ungekürzt oder gekürzt werkzeuglos mit dem ersten Rinnenelement verbindbar ist.

Es ist hilfreich, wenn die ersten Verbindungselemente einen Abstand, in Richtung der Längserstreckung eines Rinnenelementes betrachtet, zueinander haben, der gleich oder kleiner als die Länge des Verbindungsbereiches ist, in Richtung der Längserstreckung eines Rinnenelementes betrachtet.

Vorzugsweise, aber nicht zwingend, sind die ersten Verbindungselemente auch gleich beabstandet angeordnet, so dass eine äquidistante Reihe von ersten Verbindungselementen außerhalb des Verbindungsbereiches eingerichtet ist (Raster).

Im Rahmen der Erfindung sind verschiedene weitere vorteilhafte Weiterbildungen möglich.

So können die Verbindungsabschnitte mit einem Abschnittsboden und zwei einander gegenüberstehenden und an den Längsseiten des Abschnittsbodens angeordneten Abschnittswänden ausgestattet sein. Die Querschnittsform eines Verbindungsabschnitts entspricht dann der Querschnittsform des anschließenden Teils eines Rinnenelementes, nur um beispielsweise der Materialstärke von Rinnenboden und Rinnenwänden vergrößerten (oder reduzierten) Dimensionen in einer Ebene orthogonal zur Längserstreckung der Kabelrinne, so dass ein zweites Ende eines zweiten Rinnenelementes mit dem an einen Verbindungsabschnitt anschließenden Bereich einer ersten Rinnenelementes fluchtet bzw. coplanar ist.

Die Rinnenwände und die Abschnittswände können vorzugsweise in einem Winkel von ca. 90° zu dem Rinnenboden und dem Abschnittsboden stehen. Eine wannenförmige Kabelrinne kann dadurch vermieden werden.

Der Verbindungsabschnitt eines ersten Rinnenelementes kann das zweite Ende eines zweiten Rinnenelementes außen anliegend umfassen, oder in ein zweites Ende eines zweiten Rinnenelementes innen anliegend eingeführt sein.

Die Verbindungselemente sind vorzugsweise in den Abschnittsböden und den Rinnenböden und/oder in den Abschnittswänden und den Rinnenwänden angeordnet. Dabei können die ersten Verbindungselemente Verbindungsausnehmungen sein und die zweiten Verbindungselemente Verbindungsvorsprünge. Es handelt sich um sogenannte männlich/weiblich Verbindungen, wobei die Verbindungen senkrecht zur Längserstreckung der Kabelrinne erfolgen. Dadurch sind die Positionen miteinander verbundener Rinnenelemente zueinander in Längsrichtung definiert und fixiert.

Verbindungsbereiche und zweite Enden der Rinnenelemente können zueinander komplementäre Rastelemente aufweisen, welche bei Verbindung eines Verbindungsbereiches mit einem zweiten Ende eines Rinnenelementes sich miteinander verrasten.

Ein alternativer Aspekt der Erfindung lehrt einen baulich eigenständigen Verbindungsabschnitt, der im Kern wie vorstehend beschrieben gestaltet ist und mit seinen beiden Enden mit Rinnenelementen bzw. Rinnenabschnitten verbindbar ist, welche keine Verbindungsabschnitte aufweisen. Baulich ist dies so gestaltet, dass der Verbindungsabschnitt aus zwei miteinander in Längsrichtung verbundenen Verbindungsabschnitten des vorstehend beschriebenen Aufbaus gebildet ist, wobei der Aufbau spiegelsymmetrisch zu einer orthogonal zur Längserstreckung des Verbindungsabschnitts stehenden Spiegelebene gestaltet ist, so dass sich zwei Rinnenelemente ohne eigene Verbindungsabschnitte in der beschriebenen Weise miteinander verbinden lassen. Ansonsten gelten alle vorstehend angebrachten Erläuterungen für diesen selbstständigen Aspekt der Erfindung analog, sofern es nicht eine feste Verbindung zwischen Verbindungsabschnitt und Rinnenelement betrifft.

In Einzelnen betrifft dieser Aspekt eine Kabelrinne für eine erfindungsgemäße Kabelrinnentechnologie aus einer Mehrzahl von Rinnenelementen, wobei jedes Rinnenelement mit einem Rinnenboden und zwei einander gegenüberstehenden und an den Längsseiten des Rinnenbodens angeordneten Rinnenwänden ausgestattet ist, wobei jedes Rinnenelement an einem ersten Ende und an einem zweiten Ende gleich ausgebildet ist, wobei zumindest ein baulich eigenständiger Verbindungsabschnitt (beispielsweise ein Verbindungselement bildend) eingerichtet ist, wobei in den Verbindungsabschnitt ein erstes Ende eines ersten Rinnenelements und ein zweites Ende eines zweiten Rinnenelementes einführbar und so miteinander fluchtend verbindbar sind, wobei die Kabelrinne keine von den Rinnenelementen und dem Verbindungsabschnitt baulich separaten Verbindungselemente zur unmittelbaren Verbindung eines ersten Rinnenelementes und eines zweiten Rinnenelementes mit dem Verbindungselement aufweist, wobei die Rinnenelemente über die gesamte Längserstreckung in vorgegebenen Abständen, in Längsrichtung des Rinnenelementes betrachtet, eine Mehrzahl zueinander identischer erster Verbindungselemente aufweisen, wobei der Verbindungsabschnitte zweite Verbindungselemente aufweist, welche komplementär zu den ersten Verbindungselementen sind, und wobei bei Einführung des ersten Endes eines ersten Rinnenelementes sowie des zweiten Endes eines zweiten Rinnenelementes in den Verbindungsabschnitt die ersten Verbindungselemente mit den zweiten Verbindungselementen verbunden werden. Der Verbindungsabschnitt kann mit einem Abschnittsboden und zwei einander gegenüberstehenden und an den Längsseiten des Abschnittsbodens angeordneten Abschnittswänden ausgestattet sein. Die Rinnenwände und die Abschnittswände können in einem Winkel von ca. 90° zu dem Rinnenboden und dem Abschnittsboden stehen. Der Verbindungsabschnitt kann das erste Ende eines ersten Rinnenelementes das zweite Ende eines zweiten Rinnenelementes außen anliegend umfassen, oder in besagte Enden des ersten und des zweiten Rinnenelementes innen anliegend eingeführt sein. Die Verbindungselemente können in den Abschnittsböden und den Rinnenböden und/oder in den Abschnittswänden und den Rinnenwänden angeordnet sein. Die ersten Verbindungselemente können Verbindungsausnehmungen und die zweiten Verbindungselemente Verbindungsvorsprünge sein. Der Verbindungsabschnitt einerseits und die ersten und zweiten Enden der Rinnenelemente andererseits können zueinander komplementäre Rastelemente aufweisen, welche bei Verbindung eines Verbindungsabschnitts mit einem Ende eines Rinnenelementes sich miteinander verrasten.

Im Folgenden wird die Erfindung anhand von lediglich Ausführungsbeispiele darstellenden Figuren näher erläutert. Es zeigen
- Figur 1:: in der erfindungsgemäßen Kabelrinnentechnologie einsetzbare Kabelrinne (der Übersichtlichkeit halber gekürzt dargestellt)
- Figur 2:: eine Kabelrinne aus zwei miteinander verbundenen Rinnenelementen der Figur 1,
- Figur 3:: eine Variante des Gegenstandes der Figur 1,
- Figur 4:: eine erfindungsgemäße Kabelrinne aus zwei miteinander verbundenen Rinnenelementen der Figur 3,
- Figur 5:: eine alternative Variante der erfindungsgemäßen Kabelrinnentechnologie zur Verbindung von Rinnenelementen ohne angefügten Verbindungsabschnitt, und
- Figur 6:: den Gegenstand der Figur 5, verbunden mit eine Rinnenelement ohne Verbindungsabschnitt.

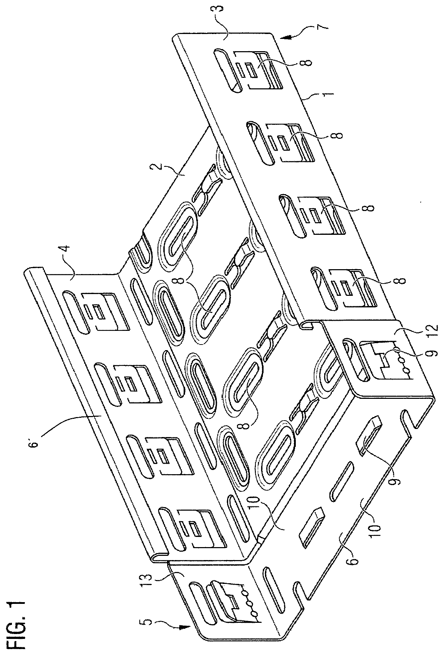

In der Figur 1 erkennt man eine Kabelrinne aus zwei Rinnenelementen 1, 1', wobei eine vergleichende Betrachtung mit der Figur 1 zeigt, dass jedes Rinnenelement 1, 1' mit einem Rinnenboden 2 und zwei einander gegenüberstehenden und an den Längsseiten des Rinnenbodens 2 angeordneten Rinnenwänden 3, 4 ausgestattet ist. Jedes Rinnenelement 1 ist an einem ersten Ende 5 mit einem Verbindungsabschnitt 6 und mit einem Rinnenabschnitt 6' versehen, wobei der Verbindungsabschnitt 6 eines ersten Rinnenelementes 1 und der Rinnenabschnitt 6' ineinander einführbar und damit verbindbar sind.

Des Weiteren erkennt man in dieser ersten Variante der erfindungsgemäßen Technologie, dass die Kabelrinne keine von den Rinnenelementen 1, 1' baulich separaten Verbindungselemente zur unmittelbaren Verbindung eines ersten Rinnenelementes 1 mit einem zweiten Rinnenelement 1' aufweist.

Die Rinnenelemente 1, 1' weisen über die gesamte Längserstreckung, mit Ausnahme des Verbindungsabschnitts 6, in vorgegebenen (beispielsweise gleichen) Abständen, in Längsrichtung des Rinnenelementes 1, 1' betrachtet, eine Mehrzahl identischer erster Verbindungselemente 8 auf. Die Verbindungsabschnitte 6 weisen zweite Verbindungselemente 9 auf, welche komplementär zu den ersten Verbindungselementen 8 sind. Bei Einführung eines zweiten Endes 7 eines Rinnenelementes 1, 1' in den Verbindungsabschnitt 6, in Richtung senkrecht zur Längserstreckung der Rinnenelemente 1, 1', werden die ersten und die zweiten Verbindungselemente 8, 9 miteinander verbunden.

In Einzelnen erkennt man in der Figur 1, dass die Verbindungsabschnitte 6 mit einem Abschnittsboden 10 und zwei einander gegenüberstehenden und an den Längsseiten des Abschnittsbodens 10 angeordneten Abschnittswänden 12, 13 ausgestattet sind.

Die Rinnenwände 3, 4 und die Abschnittswände 12, 13 stehen im Ausführungsbeispiel in einem Winkel von ca. 90° zu dem Rinnenboden 2 und dem Abschnittsboden 10.

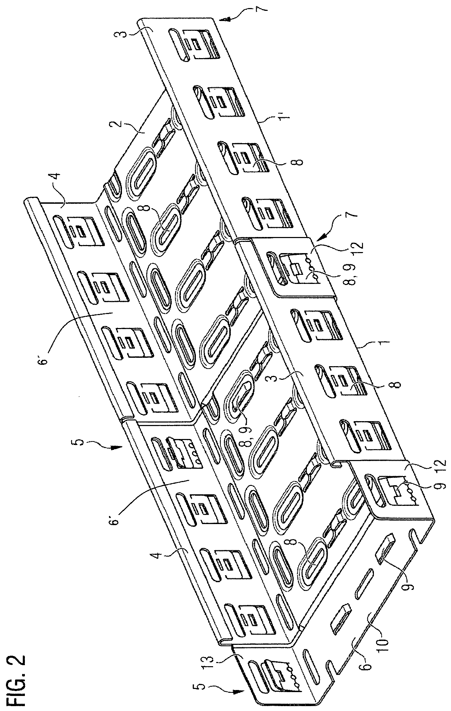

Der Figur 2 ist zu entnehmen, dass der Verbindungsabschnitt 6 eines ersten Rinnenelementes 1 das zweite Ende 7 eines zweiten Rinnenelementes 1' bzw. dessen Rinnenabschnitt 6' außen anliegend umfasst.

Die Verbindungselemente 8, 9 sind im Ausführungsbeispiel sowohl in den Abschnittsböden 10 und den Rinnenböden 2 als auch in den Abschnittswänden 12, 13 und den Rinnenwänden 3, 4 angeordnet. Die jeweiligen Verbindungelemente 8, 9 in Böden 2, 10, einerseits und Wänden 3, 4, 12, 13 andererseits können gleich oder verschieden sein.

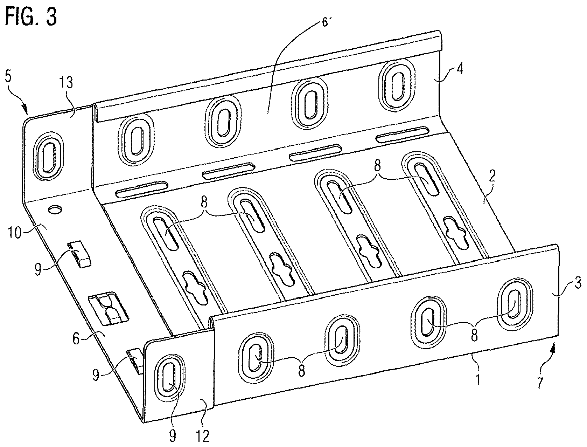

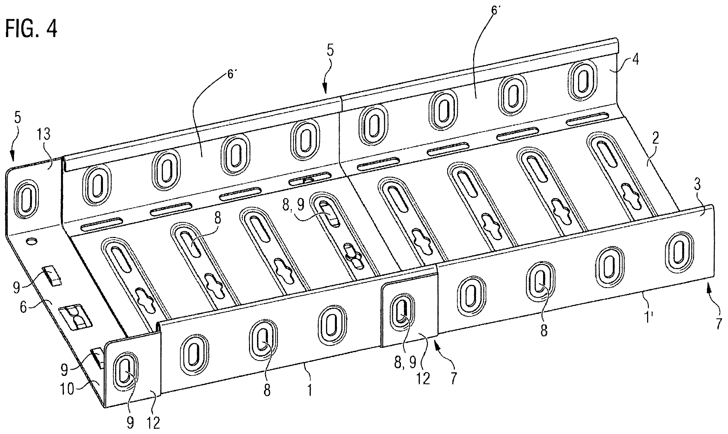

In den Ausführungsbeispielen sind die ersten Verbindungselemente 8 Verbindungsausnehmungen 8 und die zweiten Verbindungselemente 9 Verbindungsvorsprünge 9. Verschiedene konkrete Varianten sind den Figuren 1 und 2 einerseits und den Figuren 3 und 4 andererseits entnehmbar. Gemeinsam ist diesen Ausführungsformen, dass durch senkrechtes Ineinanderfügen, in Längsrichtung der Kabelrinne betrachtet, formschlüssige Verbindungen, beispielsweise Rastverbindungen, hergestellt werden.

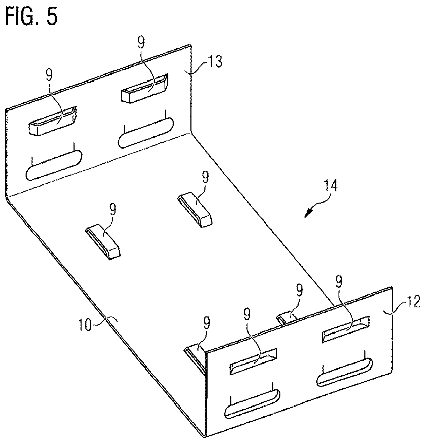

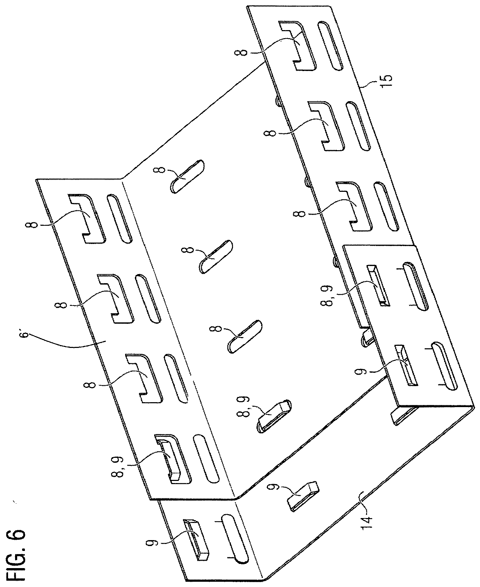

In den Figuren 5 und 6 ist eine alternative Technologie der Erfindung dargestellt, welcher einen baulich eigenständigen Verbindungsabschnitt 14 umfasst, der im Kern wie vorstehend beschrieben gestaltet ist und mit seinen beiden Enden mit Rinnenelementen 15 verbindbar ist, welche keine Verbindungsabschnitte 6 aufweisen (also nur aus einem Rinnenabschnitt 6' bestehen). Baulich ist dies so gestaltet, dass der Verbindungsabschnitt 14 aus zwei miteinander in Längsrichtung verbundenen Verbindungsabschnitten 6 des vorstehend beschriebenen Aufbaus gebildet ist (wobei die Verbindungsabschnitte 6 von den Rinnenelementen 1, 1' abgetrennt sind), wobei der Aufbau spiegelsymmetrisch zu einer orthogonal zur Längserstreckung des Verbindungsabschnitts 14 stehenden Spiegelebene S gestaltet ist, so dass sich zwei Rinnenelemente 15 ohne eigene Verbindungsabschnitte 6 in der beschriebenen Weise miteinander verbinden lassen.

Die so gebildete Kabelrinne besteht aus einer Mehrzahl von Rinnenelementen 15, wobei jedes Rinnenelement 15 mit einem Rinnenboden 2 und zwei einander gegenüberstehenden und an den Längsseiten des Rinnenbodens 2 angeordneten Rinnenwänden 3, 4 ausgestattet ist, wobei jedes Rinnenelement 15 an einem ersten Ende 5 und an einem zweiten Ende 7 gleich ausgebildet ist, wobei zumindest ein baulich eigenständiger Verbindungsabschnitt 14 eingerichtet ist, wobei in den Verbindungsabschnitt 14 ein erstes Ende 5 eines ersten Rinnenelements 15 und ein zweites Ende 7 eines zweiten Rinnenelementes 15' einführbar und so miteinander fluchtend verbindbar sind, wobei die Kabelrinne keine von den Rinnenelementen 15, 15' und dem Verbindungsabschnitt 14 baulich separaten Verbindungselemente zur unmittelbaren Verbindung eines ersten Rinnenelementes 15 und eines zweiten Rinnenelementes 15' mit dem Verbindungselement 14 aufweist, wobei die Rinnenelemente 15, 15' über die gesamte Längserstreckung in vorgegebenen Abständen, in Längsrichtung des Rinnenelementes 15, 15' betrachtet, eine Mehrzahl, insbesondere äquidistant angeordneter, erster identischer Verbindungselemente 8 aufweisen, wobei der Verbindungsabschnitte 14 zweite Verbindungselemente 9 aufweist, welche komplementär zu den ersten Verbindungselementen 8 sind, und wobei bei Einführung des ersten Endes 5 eines ersten Rinnenelementes 15 sowie des zweiten Endes 7 eines zweiten Rinnenelementes 15' in den Verbindungsabschnitt 14 die ersten Verbindungselemente 8 mit den zweiten Verbindungselementen 9 verbunden werden.

In der Figur 6 ist der Übersichtlichkeit halber nur ein erstes Rinnenelement 15 dargestellt. Im weiter zusammengebauten Zustand schließt sich das zweite Rinnenelement mit dem ersten Rinnenelement 15 fluchtend und vorzugsweise auf Stoß an das erste Rinnenelement 15 an.

Man erkennt weiter, dass der die Verbindungsabschnitt 14 mit einem Abschnittsboden 10 und zwei einander gegenüberstehenden und an den Längsseiten des Abschnittsbodens 10 angeordneten Abschnittswänden 12, 13 ausgestattet ist. Die Rinnenwände 3, 4 und die Abschnittswände 12, 13 stehen in einem Winkel von ca. 90° zu dem Rinnenboden 2 und dem Abschnittsboden 10. Der Verbindungsabschnitt 14 umfasst das erste Ende 5 eines ersten Rinnenelementes 15 und das zweite Ende 7 eines - zweiten Rinnenelementes außen anliegend, oder ist in besagte Enden des ersten und des zweiten Rinnenelementes innen anliegend eingeführt. Die Verbindungselemente 8, 9 sind in den Abschnittsböden 10 und den Rinnenböden 2 und/oder in den Abschnittswänden 12, 13 und den Rinnenwänden 3, 4 angeordnet. Die ersten Verbindungselemente 8 sind Verbindungsausnehmungen 8 und die zweiten Verbindungselemente 9 Verbindungsvorsprünge 9. Der Verbindungsabschnitt 14 einerseits und die ersten und zweiten Enden 5, 7 der Rinnenelemente 15, 15' andererseits können zueinander komplementäre Rastelemente (nicht dargestellt) aufweisen, welche bei Verbindung eines Verbindungsabschnitts 14 mit einem Ende 5, 7 eines Rinnenelementes 15, 15' sich miteinander verrasten.

## Patentansprüche

1. Eine Kabelrinnentechnologie, wobei zumindest zwei Rinnenelemente (1, 1') miteinander verbindbar sind, wobei die Rinnenelemente (1, 1') jeweils zumindest einen Rinnenabschnitt (6') aufweisen, wobei in den Rinnenabschnitten (6') eine Reihe bzw. ein Raster von ersten Verbindungselementen (8), in Längserstreckung des Rinnenabschnitts (6') betrachtet, eingerichtet ist, welche mit zweiten Verbindungselementen (9) eines Verbindungsabschnitts (6) rastend verbindbar sind, wodurch die Rinnenabschnitte (6') beliebig kürzbar und somit in beliebiger (Raster-) Länge mit Verbindungsabschnitten (6) verbindbar bzw. verrastbar sind.

2. Kabelrinnentechnologie nach Anspruch 1, wobei die Verbindungsabschnitte (6) einseitig an Rinnenabschnitten (6') angefügt oder angeformt sind, in Längsrichtung der Rinnenabschnitte (6") betrachtet, oder wobei die Verbindungsabschnitte (6) baulich separat von den Rinnenabschnitten (6') sind.

3. Kabelrinnentechnologie nach Anspruch 1 oder 2, wobei die Verbindungsabschnitte (6) und die Rinnenabschnitte (6') in Richtung orthogonal zu Längserstreckung der Rinnenelemente (1, 1'), vorzugsweise werkzeuglos, ineinander steckbar und verbindbar sind.

4. Kabelrinne für eine Kabelrinnentechnologie nach einem der Ansprüche 1 bis 3, aus einer Mehrzahl von Rinnenelementen (1, 1'), wobei jedes Rinnenelement (1, 1') mit einem Rinnenboden (2) und zwei einander gegenüberstehenden und an den Längsseiten des Rinnenbodens (2) angeordneten Rinnenwänden (3, 4) ausgestattet ist, wobei jedes Rinnenelement (1) an einem ersten Ende (5) mit einem Verbindungsabschnitt (6) versehen ist, wobei der Verbindungsabschnitt (6) eines ersten Rinnenelementes (1) und ein zweites Ende (7) eines zweiten Rinnenelementes (1') ineinander einführbar und damit verbindbar sind,
wobei die Kabelrinne keine von den Rinnenelementen (1, 1') baulich separaten Verbindungselemente zur unmittelbaren Verbindung eines ersten Rinnenelementes (1) mit einem zweiten Rinnenelement (1') aufweist,
wobei die Rinnenelemente (1, 1') über die gesamte Längserstreckung, mit Ausnahme des Verbindungsabschnitts (6), in vorgegebenen Abständen, in Längsrichtung des Rinnenelementes (1, 1') betrachtet, eine Mehrzahl identischer erster Verbindungselemente (8) aufweisen,
wobei die Verbindungsabschnitte (6) zweite Verbindungselemente (9) aufweisen, welche komplementär zu den ersten Verbindungselementen (8) sind, und
wobei bei Einführung des Verbindungsabschnitts (6) in ein zweites Ende (7) eines Rinnenelementes (1, 1') oder bei Einführung eines zweites Ende (7) eines Rinnenelementes (1, 1') in den Verbindungsabschnitt (6), in Richtung senkrecht zur Längserstreckung der Rinnenelemente (1, 1'), die ersten und die zweiten Verbindungselemente (8, 9) miteinander verbunden werden, und
wobei aufgrund der identisch ausgebildeten ersten Verbindungselemente (8) ein zweites Ende (7) eines zweiten Rinnenelementes (1') ungekürzt oder gekürzt werkzeuglos mit dem ersten Rinnenelement (1) verbindbar ist.

5. Kabelrinne nach Anspruch 4, wobei der Verbindungsabschnitt (6) eines ersten Rinnenelementes (1) das zweite Ende (7) eines zweiten Rinnenelementes (1') außen anliegend umfasst, oder in ein zweites Ende (7) eines zweiten Rinnenelementes (1') innen anliegend eingeführt ist.

6. Kabelrinne nach Anspruch 4 oder 5, wobei die Verbindungselemente (8, 9) in den Abschnittsböden (10) und den Rinnenböden (2) und/oder in den Abschnittswänden (12, 13) und den Rinnenwänden (3, 4) angeordnet sind.

7. Kabelrinne nach einem der Ansprüche 3 bis 5, wobei die ersten Verbindungselemente (8) Verbindungsausnehmungen (8), die zweiten Verbindungselemente (9) Verbindungsvorsprünge (9) sind.

8. Kabelrinne nach einem der Ansprüche 4 bis 7, wobei Verbindungsabschnitte (6) und zweite Enden (7) der Rinnenelemente (1, 1') zueinander komplementäre Rastelemente aufweisen, welche bei Verbindung eines Verbindungsabschnitts (6) mit einem zweiten Ende (7) eines Rinnenelementes (1, 1') sich miteinander in Richtungen orthogonal zur Längserstreckung der Rinnenelemente verrasten.

9. Kabelrinne für eine Kabelrinnentechnologie nach einer der Ansprüche 1 bis 3, aus einer Mehrzahl von Rinnenelementen (15), wobei jedes Rinnenelement (15) mit einem Rinnenboden (2) und zwei einander gegenüberstehenden und an den Längsseiten des Rinnenbodens (2) angeordneten Rinnenwänden (3, 4) ausgestattet ist, wobei jedes Rinnenelement (15) an einem ersten Ende (5) und an einem zweiten Ende (7) gleich ausgebildet ist, wobei zumindest ein baulich eigenständiger Verbindungsabschnitt (14) eingerichtet ist, wobei in den Verbindungsabschnitt (14) ein erstes Ende (5) eines ersten Rinnenelements (15) und ein zweites Ende (7) eines zweiten Rinnenelementes (15') einführbar und so miteinander fluchtend verbindbar sind, wobei die Kabelrinne keine von den Rinnenelementen (15, 15') und dem Verbindungsabschnitt (14) baulich separaten Verbindungselemente zur unmittelbaren Verbindung eines ersten Rinnenelementes (15) und eines zweiten Rinnenelementes (15') mit dem Verbindungselement (14) aufweist, wobei die Rinnenelemente (15, 15') über die gesamte Längserstreckung in vorgegebenen Abständen, in Längsrichtung des Rinnenelementes (15, 15') betrachtet, eine Mehrzahl identischer erster Verbindungselemente (8) aufweisen, wobei der Verbindungsabschnitte (14) zweite Verbindungselemente (9) aufweist, welche komplementär zu den ersten Verbindungselementen (8) sind, und wobei bei Einführung des ersten Endes (5) eines ersten Rinnenelementes (15) sowie des zweiten Endes (7) eines zweiten Rinnenelementes (15') in den Verbindungsabschnitt (14) die ersten Verbindungselemente (8) mit den zweiten Verbindungselementen (9) in Richtung orthogonal zur Längserstreckung der Rinnenelemente (15', 15) verrastet werden.

10. Kabelrinne nach Anspruch 9, wobei der die Verbindungsabschnitt (14) mit einem Abschnittsboden (10) und zwei einander gegenüberstehenden und an den Längsseiten des Abschnittsbodens (10) angeordneten Abschnittswänden (12, 13) ausgestattet ist, und/oder wobei die Rinnenwände (3, 4) und die Abschnittswände (12, 13) in einem Winkel von ca. 90° zu dem Rinnenboden (2) und dem Abschnittsboden (10) stehen, und/oder wobei der Verbindungsabschnitt (14) das erste Ende (5) eines ersten Rinnenelementes (15) das zweite Ende (7) eines zweiten Rinnenelementes (15') außen anliegend umfasst, oder in besagte Enden des ersten und des zweiten Rinnenelementes (15, 15') innen anliegend eingeführt ist, und/oder wobei die Verbindungselemente (8, 9) in den Abschnittsböden (10) und den Rinnenböden (2) und/oder in den Abschnittswänden (12, 13) und den Rinnenwänden (3, 4) angeordnet sind, und/oder wobei die ersten Verbindungselemente (8) Verbindungsausnehmungen (8) und die zweiten Verbindungselemente (9) Verbindungsvorsprünge (9) sind, und/oder wobei der Verbindungsabschnitt (14) einerseits und die ersten und zweiten Enden (5, 7) der Rinnenelemente (15, 15') andererseits zueinander komplementäre Rastelemente aufweisen, welche bei Verbindung eines Verbindungsabschnitts (14) mit einem Ende (5, 7) eines Rinnenelementes (15, 15') sich miteinander verrasten.
